# EUROPEAN PATENT APPLICATION

(11) **EP 3 694 219 A1**
(43) Date of publication of application: **12.08.2020**
(21) Application number: 19156320.4
(22) Date of filing: 11.02.2019
(51) Int. Cl.: H04N 21/462, H04N 21/4363, H04N 21/434, H04N 21/44, H04N 21/482

(54) **MEDIA DEVICE AND METHOD**

(71) Applicant: Vestel Elektronik Sanayi ve Ticaret A.S., 45030 Manisa (TR)
(72) Inventor: YILMAZLAR, Ismail, 45030 Manisa (TR)
(74) Representative: Kehl, Ascherl, Liebhoff & Ettmayr Patentanwälte Partnerschaft mbB

(57) **Abstract**

The present invention provides media device (100, 200, 300) for outputting one of a plurality of TV channels, the media device (100, 200, 300) comprising a plurality of input interfaces (101, 103, 105, 201, 203, 205) configured to couple the media device (100, 200, 300) to a number of video signal sources (150, 151, 152, 250, 251, 252, 360, 361, 362, 363) for receiving TV channel data (102, 104, 106, 202, 204, 206) for the TV channels from the respective video signal sources (150, 151, 152, 250, 251, 252, 360, 361, 362, 363), a signal output interface (107, 207) configured to output the TV channel data (102, 104, 106, 202, 204, 206) of a predetermined one of the TV channels from one of the video signal sources (150, 151, 152, 250, 251, 252, 360, 361, 362, 363) that is selected by a user of the media device (100, 200, 300), and a control unit (108, 208) configured to analyze which TV channels are received via the single input interfaces (101, 103, 105, 201, 203, 205) and to analyze at which resolution and/or data rate (213) the respective TV channels are received, wherein the control unit (108, 208) is further configured to switch the signal output interface (107, 207) to output the TV channel data (102, 104, 106, 202, 204, 206) of the predetermined one of the TV channels from another one of the video signal sources (150, 151, 152, 250, 251, 252, 360, 361, 362, 363), if the predetermined one of the TV channels is available at the respective other one of the video signal sources (150, 151, 152, 250, 251, 252, 360, 361, 362, 363) in a higher resolution and/or with a higher data rate (213). Further, the present invention provides a respective method.

## Description

### TECHNICAL FIELD

The invention relates to a media device and a respective method.

### BACKGROUND

Although applicable to any combination of displays and video sources, the present invention will mainly be described in conjunction with a TV set and signal inputs at the TV set.

Modern TV sets may have a plurality of different input interfaces for connecting video sources to the respective TV set. Such interfaces may e.g. comprise HDMI interfaces, YPbPR interfaces, VGA interfaces, DVB interfaces or antenna ports or the like.

Therefore, a user may usually connect more than one device to these input interfaces. For example, an antenna cable may be connected to an antenna port of the TV set. In addition, a receiver of a pay TV provider may be coupled to the TV set via an HDMI interface. Such a receiver may also be able to receive at least some free TV channels. In addition, the TV set may be coupled to the internet via an ethernet interface. Any other combination of video sources that receive TV channels may be provided by the user.

For a user it may therefore be difficult to remember which TV channels are provided by which one of the video sources.

Accordingly, there is a need for improving channel management in TV sets.

### SUMMARY OF THE INVENTION

The above stated problem is solved by the features of the independent claims. It is understood, that independent claims of a claim category may be formed in analogy to the dependent claims of another claim category.

Accordingly, it is provided:
A media device for outputting one of a plurality of TV channels, the media device comprising a plurality of input interfaces configured to couple the media device to a number, i.e. one or more, of video signal sources for receiving TV channel data for the TV channels, e.g. at least video and audio signals for the respective TV channel, from the respective video signal sources, a signal output interface configured to output the TV channel data of a predetermined one of the TV channels from one of the video signal sources that is selected by a user of the media device, and a control unit configured to analyze which TV channels are received via the single input interfaces and to analyze at which resolution and/or data rate the respective TV channels are received, wherein the control unit is further configured to switch the signal output interface to output the TV channel data of the predetermined one of the TV channels from another one of the video signal sources, if the predetermined one of the TV channels is available at the respective other one of the video signal sources in a higher resolution and/or with a higher data rate.

Further, it is provided:
A method for operating a media device, the method comprising receiving TV channel data for a number of TV channels from a number of video signal sources, outputting the TV channel data of a predetermined one of the TV channels from one of the video signal sources that is selected by a user of the media device via a signal output interface of the media device, analyzing which TV channels are received and at which resolution and/or data rate the respective TV channels are received, and switching the signal output interface to output the TV channel data of the predetermined one of the TV channels from another one of the video signal sources, if the predetermined one of the TV channels is available at the respective other one of the video signal sources in a higher resolution and/or with a higher data rate.

The present invention is based on the finding that it may be difficult for users of a TV set with multiple video signal sources to remember which TV channel is available on which one of the video signal sources. Further, it may be hard for a user to remember with which quality the respective TV channel is provided by the respective video signal source. The term quality in this regard may e.g. refer to the resolution of the video signal of the respective TV channel or the data rate of the video signal of the respective TV channel.

Especially, in setups where multiple video signal sources are coupled e.g. to a TV set, a single channel may be provided by more than one video signal source in different qualities, e.g. in different resolutions and/or with different data rates.

Usually, a user has to remember which video signal source provides the better-quality version of the TV channel, and has to switch to that video signal source manually to select the respective TV channel.

The present invention takes into account that a single TV channel may be provided by multiple video signal sources and accordingly provides the media device. The media device may e.g. be integrated in or be provided as integral part of a TV set or another display device. In such an embodiment, the signal output interface may comprise an internal interface of the TV set or display device. The present invention therefore also provides a TV set comprising the media interface. Such a TV set may also comprise a display device, and at least one of the video signal sources, e.g. in the form of a DVB receiver or the like.

In other embodiments, the media device may e.g. be an external device that may be connected via the signal output interface to a TV set. In such an embodiment, the signal output interface may comprise an HDMI interface or any other adequate interface to provide the TV set or display device at least with the video and audio signals of the respective TV channel. In this respect the terms receiving "a TV channel" or receiving "TV channel data" or receiving "video and audio signals for a TV channel" or the like, may be used interchangeably and may refer to the reception of any kind if digital or analog signals that represent the respective TV channel.

It is understood, that the input interfaces may e.g. comprise any combination of HDMI interfaces, YPbPR interfaces, VGA interfaces, DVB interfaces, DisplayPort interfaces or antenna ports or the like. The output interface may also comprise any one of an HDMI interface, a YPbPR interface, a VGA interface, a DVB interface, a DisplayPort interface or an antenna port or the like.

Therefore, multiple video signal sources may be coupled to the input interfaces. It is understood that not all of the input interfaces necessarily need to be coupled to video signal sources that provide signals of TV channels. For example, a gaming console may be coupled to an HDMI interface. However, at least some input interfaces may be coupled to video signal sources that may provide the signals of TV channels. As explained above, different video signal sources may receive and provide the different TV channels in different qualities. For example, a DVB-S2 receiver may receive a TV channel in Full-HD resolution. Such a DVB-S2 receiver may be integrally provided with the media device in a TV set. In this exemplary embodiment, the respective input interface may be provided as internal input interface to the media device. Alternatively, the DVB-S2 receiver may be provided as external video signal source and may be coupled to one of the external input interfaces.

The same TV channel, however, may also be received via an internet streaming device. Such an internet streaming device may receive the same TV channel with a lower resolution, like e.g. SD, or may receive the same channel with an even higher resolution, like e.g. 4k or 8k. It is understood, that the internet streaming device may also be integrated in a TV set e.g. with the media device and other video signal sources.

If a user now switches to said TV channel on the DVB-S2 receiver, he will be provided with the Full-HD version of the TV channel. The user may, however, be unaware of the fact that the same TV channel is available in 4k or 8k resolution or may not remember the respective video signal source or channel on the respective video signal source.

Therefore, the control unit will analyze if the user-selected TV channel is available via one of the video signal sources in better quality, e.g. with higher resolution or data rate, than the user selected version of said TV channel. In case that a better-quality version of the TV channel is detected by the control unit, the control unit will make the signal output interface to switch to the detected version of the TV channel that has a higher quality.

The user will therefore automatically be provided with the best version of the TV channel that is available in his setup without having to memorize which channel is available via which video signal source in the best quality.

Further embodiments of the present invention are subject of the further dependent claims and of the following description, referring to the drawings.

In an embodiment, the media device may comprise a memory coupled to the control unit, wherein the control unit is configured to store in the memory a list of TV channels that may be received via each one of the input interfaces and to store for each one of the TV channels the resolution and/or data rate at which the respective TV channel is received via the respective one of the input interfaces, and the control unit may be configured to select for the TV channel that is selected by a user the version with the highest resolution and/or the highest data rate from the list and control the signal output interface accordingly.

It is understood, that the control unit may contact the respective video signal sources and request the information about the available TV channels from every single video signal source, e.g. whenever the media device is powered up. Possible implementations of the process of requesting the information about the available TV channels will be provided below.

It may, however, be assumed that the setup in which the media device is used is a static setup, that was initially e.g. setup once and is not modified. In such a case, the work load on the control unit may be reduced by storing the list of available channels in the memory instead of acquiring the list of TV channels when the media device is switched on. Further, the memory also provides the possibility to store the list of available TV channels for every video signal source, even if the control unit may not automatically retrieve said information. In this case, a user of the media device may e.g. manually fill the lists upon setup of the system in which the media device is used.

The control unit may further monitor the video signal sources that are connected to the input interfaces and may store respective identification information in the memory, e.g. in a list. For devices connected via HDMI the monitoring may be performed based on the name of the device that is transmitted via the CEC feature of HDMI, e.g. with the Device OSD Name Transfer command. Therefore, when a new video signal source is detected or when a video signal source is changed on one of the input interfaces, the control unit may update the identification information of the available video signal sources. After every change regarding the video signal sources, the control unit may also update the channel list in the memory. In case that the lists of available TV channels are manually generated by a user, the control unit may request the user to update the lists.

In a further embodiment, when switching the signal output interface, the control unit may further be configured to output a control signal to the video signal source that is coupled to the input interface that receives the version of the TV channel with the highest resolution and/or data rate, wherein the control signal may control the video signal source to output the respective TV channel.

At least some of the video signal sources may be individual electronic devices that are external to the media device or that are not integrated into another device, like a TV set, with the media device. In a TV set that comprises the media device and e.g. a DVB receiver, the control unit may be coupled to the DVB receiver or may be embodied as a computer program that is executed on a controller of the DVB receiver. Therefore, the control unit may directly control the DVB receiver to switch to another channel by use of the control signal. In this case, the control signal may e.g. be an internal control signal provided via an internal data bus or as software control signal.

However, if the respective video signal source is not integrated with the media device in such a way, the control unit may not have direct control over the respective video signal source. In such an embodiment, the control signal may be an external control signal that is output by the control unit to another device. As will be seen below, such an external control signal may be output via a dedicated external control interface of the media device or via the respective input interface, at least in case of bidirectional input interfaces.

In another embodiment, the input interface that receives the selected version of the TV channel may comprise a HDMI interface, and the control unit may be configured to provide the control signal as a CEC signal.

Especially, for high-resolution digital video content, the HDMI interface is the de-facto standard interface, when a video signal source is to be connected to a receiving device. Therefore, at least some of the video signal sources may be coupled to the media device via an HDMI interface.

The HDMI interface provides the so-called Consumer Electronics Control, CEC, feature. CEC is designed to allow a user to control multiple devices that are interconnected via HDMI interfaces with a single remote control. With CEC remote control signals that are received at one device, e.g. a TV set, may be sent via a HDMI cable to a DVB receiver.

However, the same CEC may also be used by the control unit to provide the respective control signals to the video signal sources. For example, a DVB receiver connected via an HDMI interface to the media device may receive on program 9 the required TV channel with the highest resolution. The control unit may then control the DVB receiver via the CEC features of the HDMI interface to switch to program 9 and may then switch the signal output interface to output the signals received from the DVB receiver.

In an embodiment, the media device may comprise an infrared interface, wherein the control unit may be configured to provide the control signal as an infrared signal.

Usually every electronic media device that may serve as an external video signal source to the media device will comprise an infrared interface for controlling the respective device. Therefore, such an interface may also be used to control the respective video signal source with the control unit. It is understood, that to this end, the media device may comprise the infrared interface that allows emitting infrared signals.

Further, the control unit may comprise a list of known video signal sources and corresponding infrared codes that are required to control the respective video signal source. A user may then select the video signal source that is connected to each one of the input interfaces from said list. Alternatively, the control unit may automatically detect the connected video signal sources e.g. via a HDMI-CEC command, e.g. the Consumer Electronics Control command.

In case that a video signal source is not in the list, the control unit may also be capable of storing new commands. To this end, the infrared interface may be configured to receive infrared signals. The control unit may then record infrared commands that a user may provide from the remote control of the respective video signal source to the infrared interface. The process of recording new infrared signals may e.g. be guided by the control unit via an on-screen display that provides the user with respective instructions.

In a further embodiment, the control unit may be configured to request a user confirmation prior to switching the signal output.

The control unit may automatically switch from one video signal source to another. However, there may be reasons, when switching would result in an error. For example, a video streaming device may be capable of receiving a 4K stream of a TV channel and a DVB-T receiver may be capable of receiving the same TV channel as Full-HD version. In case of an internet outage or low internet bandwidth, the video streaming device may however not be capable of receiving the respective TV channel.

Requesting a user's confirmation allows a user to take into account such contingencies and watch the TV channel at a lower resolution if he knows about the internet outage. The control unit may e.g. store the user's decision until the media device is switched off the next time.

In another embodiment, the control unit is configured to analyze which TV channels are received via the single input interfaces by performing an image recognition and/or by analyzing teletext data and/or by parsing DVB metadata and/or by parsing HDMI signals received via an HDMI-based input interface, especially in the DDC channel and/or the CEC channel and/or an HDMI Ethernet channel.

As already indicated above, a user may input into the media device which TV channels may be received at which input interface with which resolution and/or bandwidth.

The control unit may however also perform an automatic channel detection. For example, the control unit may perform an image recognition that tries to identify channel logos or channel names. Image recognition of the channel logos and channel names allows easily matching two identical channels that are received from two different video signal sources. Especially, it is not required to know the exact name of the channel, since the logos or contents of two channels are comparted with each other. Another source for the names of the TV channels is the teletext that usually features the name of the TV channel. Therefore, the control unit may analyze the teletext data for the single TV channels. The DVB standard comprises metadata that is provided for each channel. Therefore, the control unit may parse the DVB metadata to identify the channel names. As further possibility for the control unit to identify the TV channels, the single video signal sources may provide the TV channel names or full lists of available TV channels via a digital interface, for example via the HDMI interface or via a network interface, like e.g. an ethernet or a WIFI interface. In HDMI signals received via an HDMI-based input interface such information may e.g. be provided in the DDC channel and/or the CEC channel and/or an HDMI Ethernet channel of the HDMI interface.

The respective video signal sources may comprise a control unit capable of generating the information regarding the TV channels and the respective resolutions and/or data rates and may transmit said information to the media device. The present invention therefore also provides such video sources with respective control units.

The control unit may also comprise an automatic configuration function or mode. In this mode, the control unit may control the single connected video signal sources to automatically provide the information regarding the available TV channels or to cycle through all available TV channels such that the control unit may generate the TV channel list locally.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a media device according to the present invention;
Fig. 2 shows a block diagram of another embodiment of a media device according to the present invention;
Fig. 3 shows a block diagram of another embodiment of a media device according to the present invention; and
Fig. 4 shows a flow diagram of an embodiment of a method according to the present invention.

In the figures like reference signs denote like elements unless stated otherwise.

### DETAILED DESCRIPTION OF THE DRAWINGS

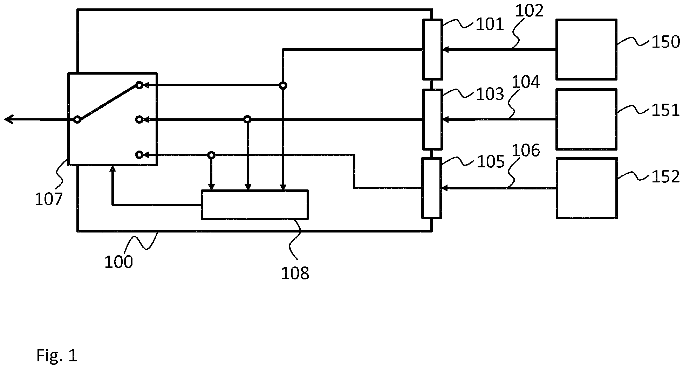

Fig. 1 shows a block diagram of a media device 100. The media device 100 comprises three input interfaces 101, 103, 105 that are coupled to a control unit 108 and to a signal output interface 107. It is understood, that the number of three input interfaces 101, 103, 105 is just exemplarily chosen and that any other number of input interfaces is possible.

Each one of the input interfaces 101, 103, 105 is coupled to a video signal source 150, 151, 152 for receiving TV channel data 102, 104, 106 for different TV channels from the respective video signal source 150, 151, 152. The input interfaces 101, 103, 105 provide the respective TV channel data 102, 104, 106 to the signal output interface 107 and the control unit 108. When a user selects a source in the media device, e.g. via an infrared remote, the signal output interface 107 will switch to the respective input interface 101, 103, 105. It is understood, that the switch may also be provided as a dedicated switch instead of an integrated switch in the signal output interface 107. It is understood, that the media device 100 may comprise a respective interface, e.g. an infrared interface, for receiving user input regarding the selection of a TV channel.

The control unit 108 analyzes which TV channels are received via the single input interfaces 101, 103, 105 further analyzes at which resolution and/or data rate the respective TV channels are received. This puts the control unit 108 into position to select the best-quality version of the respective TV channel among all available versions.

The control unit 108 then controls or switches the signal output interface 107 to output the TV channel data 102, 104, 106 of the predetermined one of the TV channels from another one of the video signal sources 150, 151, 152, if the predetermined one of the TV channels is available at the respective other one of the video signal sources 150, 151, 152 in a higher resolution and/or with a higher data rate.

The control unit 108 may request a user confirmation prior to switching the signal output. In an embodiment, the switching of the signal output interface 107 in response to a user input may be delayed until after the decision is taken in the control unit 108 about which source or video signal source 150, 151, 152 should be used.

The control unit 108 may e.g. analyze which TV channels are received via the single input interfaces 101, 103, 105 by performing an image recognition and/or by analyzing teletext data and/or by parsing DVB metadata and/or by parsing HDMI signals received via an HDMI-based input interface 101,103,105, especially in the DDC channel and/or the CEC channel and/or an HDMI Ethernet channel.

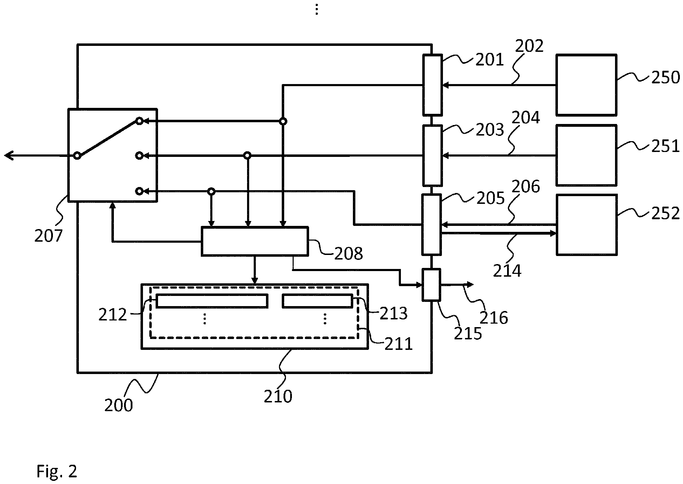

Fig. 2 shows a block diagram of another media device 200. The media device 200 is based on the media device 100. Therefore, the media device 200 comprises three input interfaces 201, 203, 205 that are coupled to a control unit 208 and to a signal output interface 207. It is understood, that the number of three input interfaces 201, 203, 205 is just exemplarily chosen and that any other number of input interfaces is possible.

Each one of the input interfaces 201, 203, 205 is coupled to a video signal source 250, 251, 252 for receiving TV channel data 202, 204, 206 for different TV channels from the respective video signal source 250, 251, 252. The input interfaces 201, 203, 205 provide the respective TV channel data 202, 204, 206 to the signal output interface 207 and the control unit 208. When a user selects a source in the media device, e.g. via an infrared remote, the signal output interface 207 will switch to the respective input interface 201, 203, 205. It is understood, that the switch may also be provided as a dedicated switch instead of an integrated switch in the signal output interface 207. It is understood, that the media device 200 may comprise a respective interface, e.g. an infrared interface, for receiving user input regarding the selection of a TV channel. The above-said about the control unit 108 also applies to the control unit 208.

In addition, the media device 200 comprises a memory 210 coupled to the control unit 208. The control unit 208 stores in the memory 210 a list 211 of TV channels or channel names 212 that may be received via each one of the input interfaces 201, 203, 205 together with the resolution and/or data rate 213 at which the respective TV channel is received via the respective one of the input interfaces 201, 203, 205. With the memory 210 the control unit 208 selects for the TV channel that is selected by a user the version with the highest resolution and/or the highest data rate 213 from the list 211 and controls the signal output interface 207 accordingly.

When switching the signal output interface 207, the control unit 208 may output a control signal to the video signal source 250, 251, 252 that is coupled to the input interface 201, 203, 205 that receives the version of the TV channel with the highest resolution and/or data rate 213. The control signal may control the video signal source 250, 251, 252 to output the respective TV channel. The input interface 201, 203, 205 that receives the selected version of the TV channel may be a HDMI interface. The control unit 208 may in this case provide the control signal as a CEC signal 214. In addition, or as alternative, the media device 200 may comprise an infrared interface 215. In this case, the control unit 208 may be configured to provide the control signal as an infrared signal 216.

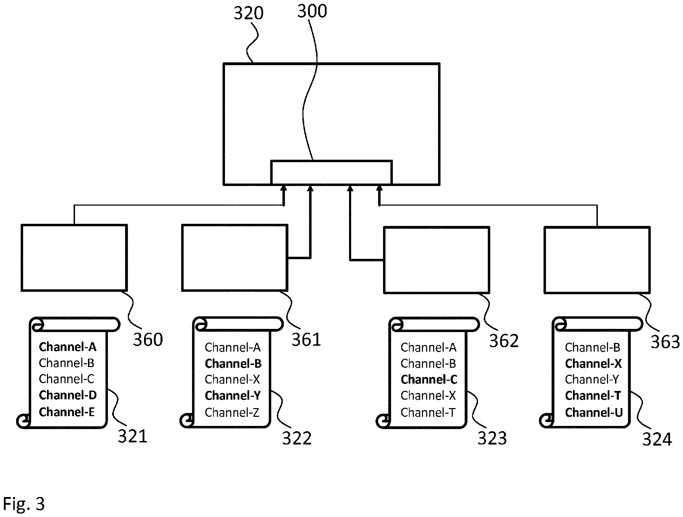

Fig. 3 shows a block diagram of another media device 300. The media device 300 is embedded in a TV set 320. That means that the TV set 320 comprises a display and that the TV channel data that is output by the signal output interface is displayed on the display of the TV set 320. The media device 300 is shown as simplified example. It is understood, that all explanations above regarding the media device 100 and/or the media device 200 also apply to the media device 300.

In contrast to the example of Fig. 2, single lists 321, 322, 323, 324 are shown for every one of the video signal sources 360, 361, 362, 363. It is understood however, that these single lists 321, 322, 323, 324 may also be combined into a single list as shown in Fig. 2. The lists 321, 322, 323, 324 show all TV channels that may be received via the respective video signal sources 360, 361, 362, 363. Further, if a TV channel is received in the best quality at a video signal sources 360, 361, 362, 363 the TV channel is marked (shown as bold text in Fig. 3) in the lists 321, 322, 323, 324.

If a user for example is currently watching a TV channel from video signal source 361 and then switches to TV Channel-A, a better-quality version is available at the video signal source 360. Therefore, as explained above, the media device 300 may switch to displaying the TV Channel-A from video signal source 360. The same applies to all other possible TV channels.

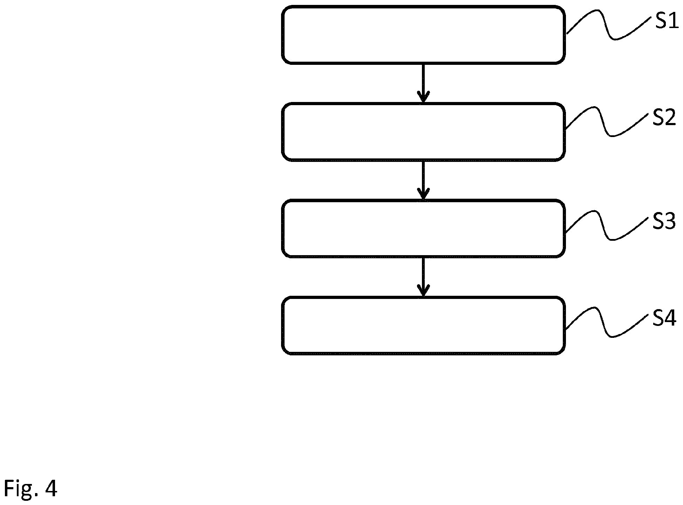

For sake of clarity in the following description of the method-based Fig. 4 the reference signs used above in the description of apparatus-based Figs. 1 - 3 will be maintained. Fig. 4 shows a flow diagram of an embodiment of a method for operating a media device 100, 200, 300.

The method comprises receiving S1 TV channel data 102, 104, 106, 202, 204, 206 for a number of TV channels from a number of video signal sources 150, 151, 152, 250, 251, 252, 360, 361, 362, 363, outputting S2 the TV channel data 102, 104, 106, 202, 204, 206 of a predetermined one of the TV channels from one of the video signal sources 150, 151, 152, 250, 251, 252, 360, 361, 362, 363 that is selected by a user of the media device 100, 200, 300 via a signal output interface 107, 207 of the media device 100, 200, 300, analyzing S3 which TV channels are received and at which resolution and/or data rate 213 the respective TV channels are received, and switching S4 the signal output interface 107, 207 to output the TV channel data 102, 104, 106, 202, 204, 206 of the predetermined one of the TV channels from another one of the video signal sources 150, 151, 152, 250, 251, 252, 360, 361, 362, 363, if the predetermined one of the TV channels is available at the respective other one of the video signal sources 150, 151, 152, 250, 251, 252, 360, 361, 362, 363 in a higher resolution and/or with a higher data rate 213.

The method may also comprise storing a list 211, 321, 322, 323, 324 of TV channels that may be received via each one of the video signal sources 150, 151, 152, 250, 251, 252, 360, 361, 362, 363 and storing for each one of the TV channels the resolution and/or data rate 213 at which the respective TV channel is received via the respective one of the video signal sources 150, 151, 152, 250, 251, 252, 360, 361, 362, 363, and selecting for the TV channel that is selected by a user the version with the highest resolution and/or the highest data rate 213 from the list 211, 321, 322, 323, 324, and controlling the signal output interface 107, 207 to output the selected TV channel accordingly. A user confirmation may be requested prior to switching the signal output.

When switching the signal output interface 107, 207, a control signal may be output to the video signal source 150, 151, 152, 250, 251, 252, 360, 361, 362, 363 that provides the version of the TV channel with the highest resolution and/or data rate 213, wherein the control signal controls the video signal source 150, 151, 152, 250, 251, 252, 360, 361, 362, 363 to output the respective TV channel.

The selected version of the TV channel may for example be received via a HDMI interface. In this example, the control signal may be provided as a CEC signal 214 via said HDMI interface. The control signal may also be provided as an infrared signal 216 via a respective infrared interface 215.

The step of analyzing may comprise performing an image recognition and/or analyzing teletext data and/or parsing DVB metadata and/or parsing HDMI signals received via an HDMI-based input interface 101, 103, 105, 201, 203, 205, especially in the DDC channel and/or the CEC channel and/or an HDMI Ethernet channel.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides media device 100, 200, 300 for outputting one of a plurality of TV channels, the media device 100, 200, 300 comprising a plurality of input interfaces 101, 103, 105, 201, 203, 205 configured to couple the media device 100, 200, 300 to a number of video signal sources 150, 151, 152, 250, 251, 252, 360, 361, 362, 363 for receiving TV channel data 102, 104, 106, 202, 204, 206 for the TV channels from the respective video signal sources 150, 151, 152, 250, 251, 252, 360, 361, 362, 363, a signal output interface 107, 207 configured to output the TV channel data 102, 104, 106, 202, 204, 206 of a predetermined one of the TV channels from one of the video signal sources 150, 151, 152, 250, 251, 252, 360, 361, 362, 363 that is selected by a user of the media device 100, 200, 300, and a control unit 108, 208 configured to analyze which TV channels are received via the single input interfaces 101, 103, 105, 201, 203, 205 and to analyze at which resolution and/or data rate 213 the respective TV channels are received, wherein the control unit 108, 208 is further configured to switch the signal output interface 107, 207 to output the TV channel data 102, 104, 106, 202, 204, 206 of the predetermined one of the TV channels from another one of the video signal sources 150, 151, 152, 250, 251, 252, 360, 361, 362, 363, if the predetermined one of the TV channels is available at the respective other one of the video signal sources 150, 151, 152, 250, 251, 252, 360, 361, 362, 363 in a higher resolution and/or with a higher data rate 213. Further, the present invention provides a respective method.

### List of reference signs

- 100, 200, 300: media device
- 101, 103, 105, 201, 203, 205: input interface
- 102, 104, 106, 202, 204, 206: TV channel data
- 107, 207: signal output interface
- 108, 208: control unit

- 210: memory
- 211: list
- 212: channel name
- 213: resolution and/or data rate
- 214: CEC signal
- 215: infrared interface
- 216: infrared signal

- 320: TV set
- 321, 322, 323, 324: list

- 150, 151, 152, 250, 251, 252: video signal source
- 360, 361, 362, 363: video signal source

- S1, S2, S3, S4: method steps

## Claims

1. Media device (100, 200, 300) for outputting one of a plurality of TV channels, the media device (100, 200, 300) comprising
a plurality of input interfaces (101, 103, 105, 201, 203, 205) configured to couple the media device (100, 200, 300) to a number of video signal sources (150, 151, 152, 250, 251, 252, 360, 361, 362, 363) for receiving TV channel data (102, 104, 106, 202, 204, 206) for the TV channels from the respective video signal sources (150, 151, 152, 250, 251, 252, 360, 361, 362, 363),
a signal output interface (107, 207) configured to output the TV channel data (102, 104, 106, 202, 204, 206) of a predetermined one of the TV channels from one of the video signal sources (150, 151, 152, 250, 251, 252, 360, 361, 362, 363) that is selected by a user of the media device (100, 200, 300), and
a control unit (108, 208) configured to analyze which TV channels are received via the single input interfaces (101, 103, 105, 201, 203, 205) and to analyze at which resolution and/or data rate (213) the respective TV channels are received,
wherein the control unit (108, 208) is further configured to switch the signal output interface (107, 207) to output the TV channel data (102, 104, 106, 202, 204, 206) of the predetermined one of the TV channels from another one of the video signal sources (150, 151, 152, 250, 251, 252, 360, 361, 362, 363), if the predetermined one of the TV channels is available at the respective other one of the video signal sources (150, 151, 152, 250, 251, 252, 360, 361, 362, 363) in a higher resolution and/or with a higher data rate (213).

2. Media device (100, 200, 300) according to claim 1, comprising a memory (210) coupled to the control unit (108, 208), wherein the control unit (108, 208) is configured to store in the memory (210) a list (211, 321, 322, 323, 324) of TV channels that may be received via each one of the input interfaces (101, 103, 105, 201, 203, 205) and to store for each one of the TV channels the resolution and/or data rate (213) at which the respective TV channel is received via the respective one of the input interfaces (101, 103, 105, 201, 203, 205), and
wherein the control unit (108, 208) is configured to select for the TV channel that is selected by a user the version with the highest resolution and/or the highest data rate (213) from the list (211, 321, 322, 323, 324) and control the signal output (107, 207) interface accordingly.

3. Media device (100, 200, 300) according to any one of the preceding claims, wherein when switching the signal output interface (107, 207), the control unit (108, 208) is further configured to output a control signal to the video signal source (150, 151, 152, 250, 251, 252, 360, 361, 362, 363) that is coupled to the input interface (101, 103, 105, 201, 203, 205) that receives the version of the TV channel with the highest resolution and/or data rate (213), wherein the control signal is configured to control the video signal source (150, 151, 152, 250, 251, 252, 360, 361, 362, 363) to output the respective TV channel.

4. Media device (100, 200, 300) according to claim 3, wherein the input interface (101, 103, 105, 201, 203, 205) that receives the selected version of the TV channel comprises a HDMI interface, and wherein the control unit (108, 208) is configured to provide the control signal as a CEC signal (214).

5. Media device (100, 200, 300) according to claim 3 or 4, comprising an infrared interface (215), wherein the control unit (108, 208) is configured to provide the control signal as an infrared signal (216).

6. Media device (100, 200, 300) according to any one of the preceding claims, wherein the control unit (108, 208) is configured to request a user confirmation prior to switching the signal output.

7. Media device (100, 200, 300) according to any one of the preceding claims, wherein the control unit (108, 208) is configured to analyze which TV channels are received via the single input interfaces (101, 103, 105, 201, 203, 205) by performing an image recognition and/or by analyzing teletext data and/or by parsing DVB metadata and/or by parsing HDMI signals received via an HDMI-based input interface (101, 103, 105, 201, 203, 205), especially in the DDC channel and/or the CEC channel and/or an HDMI Ethernet channel.

8. Method for operating a media device (100, 200, 300), the method comprising:
receiving (S1) TV channel data (102, 104, 106, 202, 204, 206) for a number of TV channels from a number of video signal sources (150, 151, 152, 250, 251, 252, 360, 361, 362, 363),
outputting (S2) the TV channel data (102, 104, 106, 202, 204, 206) of a predetermined one of the TV channels from one of the video signal sources (150, 151, 152, 250, 251, 252, 360, 361, 362, 363) that is selected by a user of the media device (100, 200, 300) via a signal output interface (107, 207) of the media device (100, 200, 300),
analyzing (S3) which TV channels are received and at which resolution and/or data rate (213) the respective TV channels are received, and
switching (S4) the signal output interface (107, 207) to output the TV channel data (102, 104, 106, 202, 204, 206) of the predetermined one of the TV channels from another one of the video signal sources (150, 151, 152, 250, 251, 252, 360, 361, 362, 363), if the predetermined one of the TV channels is available at the respective other one of the video signal sources (150, 151, 152, 250, 251, 252, 360, 361, 362, 363) in a higher resolution and/or with a higher data rate (213).

9. Method according to claim 8, comprising storing a list (211, 321, 322, 323, 324) of TV channels that may be received via each one of the video signal sources (150, 151, 152, 250, 251, 252, 360, 361, 362, 363) and storing for each one of the TV channels the resolution and/or data rate (213) at which the respective TV channel is received via the respective one of the video signal sources (150, 151, 152, 250, 251, 252, 360, 361, 362, 363), and
selecting for the TV channel that is selected by a user the version with the highest resolution and/or the highest data rate (213) from the list (211, 321, 322, 323, 324), and controlling the signal output interface (107, 207) to output the selected TV channel accordingly.

10. Method according to any one of the preceding claims 8 and 9, wherein when switching the signal output interface (107, 207), a control signal is output to the video signal source (150, 151, 152, 250, 251, 252, 360, 361, 362, 363) that provides the version of the TV channel with the highest resolution and/or data rate (213), wherein the control signal controls the video signal source (150, 151, 152, 250, 251, 252, 360, 361, 362, 363) to output the respective TV channel.

11. Method according to claim 10, wherein the selected version of the TV channel is received via a HDMI interface, and wherein the control signal is provided as a CEC signal (214) via said HDMI interface.

12. Method according to claim 10 or 11, wherein the control signal is provided as an infrared signal (216).

13. Method according to any one of the preceding claims 8 to 13, wherein a user confirmation is requested prior to switching the signal output.

14. Method according to any one of the preceding claims, wherein the step of analyzing comprises performing an image recognition and/or analyzing teletext data and/or parsing DVB metadata and/or parsing HDMI signals received via an HDMI-based input interface (101, 103, 105, 201, 203, 205), especially in the DDC channel and/or the CEC channel and/or an HDMI Ethernet channel.
